# EUROPEAN PATENT APPLICATION

(11) **EP 3 226 111 A1**
(43) Date of publication of application: **04.10.2017**
(21) Application number: 15863187.9
(22) Date of filing: 24.04.2015
(51) Int. Cl.: G06F 3/041

(54) **IN-CELL TOUCH PANEL, TOUCH DETECTION METHOD, AND LIQUID CRYSTAL DISPLAY DEVICE**

(30) Priority: 27.11.2014 CN 201410705573
(71) Applicant: Shenzhen Goodix Technology Co., Ltd., Futian Free Trade Zone Shenzhen, Guangdong 518000 (CN)
(72) Inventor: YAO, Xiangzhong, Shenzhen Guangdong 518000 (CN); KANG, Wei, Shenzhen Guangdong 518000 (CN); PENG, Sheng, Shenzhen Guangdong 518000 (CN)
(74) Representative: Valea AB
(86) International application number: PCT/CN2015/077426
(87) International publication number: WO 2016/082448

(57) **Abstract**

Disclosed are an in-cell touch panel, a touch detection method and a liquid crystal display device. The in-cell touch panel includes a driving layer, a liquid crystal layer and a sensing layer which are sequentially stacked, and a touch control unit and an LCD driving unit which are connected to each other, the driving layer being provided with a plurality of driving lines, the sensing layer being provided with a plurality of sensing lines connected to the touch control unit. The driving layer includes at least two scanning regions, and the touch control unit is configured to send at least two driving signals with different frequencies to scan corresponding scanning regions on the driving layer.

## Description

### TECHNICAL FIELD

The present invention relates to the technical field of liquid crystal displays, and in particular, relates to an in-cell touch panel, a touch detection method and a liquid crystal display device.

### BACKGROUND

The in-cell technology is a method for embedding functions of a touch panel to liquid crystal pixels. That is, functions of a touch sensor are embedded inside a display screen, both touch control and display control are implemented by means of cooperation of a liquid crystal display (LCD) driving unit and a touch control unit.

To implement the touch control and display functions on an in-cell touch panel, the touch control unit needs to constantly scan the screen. The scanning process in the related art is as follows: the LCD driving unit sends a scanning start timing signal and a scanning timing signal to the touch control unit; the touch control unit sends a driving signal having a fixed time length and a fixed frequency to the LCD driving unit at a timeslot when the scanning timing signal is a high level; the LCD driving unit outputs the driving signal to a driving line on the driving layer of the screen to implement scanning of the screen and to finally implement the touch control function; and the LCD driving unit displays a scanning result at the timeslot when the scanning timing signal is a low level to implement the display function.

However, with increase of the screen size, the number of driving lines may be increased. While ensuring the report rate and the LCD display, the time of scanning the driving layer needs to be shortened. That is, the time when the scanning timing signal given each time is a high level needs to be reduced, such that the signal-to-noise ratio of the touch control unit is reduced and the touch control performance is affected. In addition, with improvement of the screen resolution, the time of the LCD display is increased. That is, the time when the scanning timing signal given each time is a low level is increased and the time when the scanning timing signal is a high level is reduced. In this way, the time of scanning the driving layer is shortened, such that the signal-to-noise ratio of the touch control unit is reduced and the touch control performance is affected.

### SUMMARY

The present invention is intended to provide an in-cell touch panel, a touch control detection method and a liquid crystal display device, in order to solve the above problem, improve the signal-to-noise ratio and enhance the touch control performance.

The present invention provides an in-cell touch panel, including a driving layer, a liquid crystal layer and a sensing layer which are sequentially stacked, and a touch control unit and an LCD driving unit which are connected to each other, the driving layer being provided with a plurality of driving lines, the sensing layer being provided with a plurality of sensing lines connected to the touch control unit; the driving layer includes at least two scanning regions, and the touch control unit is configured to send at least two driving signals with different frequencies to scan corresponding scanning regions on the driving layer.

Preferably, the driving lines are connected to the LCD driving unit; the touch control unit is configured to send at least two driving signals with different frequencies to the LCD driving unit; and the LCD driving unit is configured to amplify the at least two driving signals with different frequencies and output the amplified driving signals to the driving lines in the corresponding scanning regions on the driving layer.

Preferably, the driving lines are connected to the touch control unit; and the touch control unit is configured to directly output at least two driving signals with different frequencies to the driving lines in the corresponding scanning regions on the driving layer.

Preferably, the touch control unit comprises at least two frequency demodulation modules; and the touch control unit is further configured to detect a touch control signal, and demodulate the touch control signal by using a corresponding frequency demodulation module.

Preferably, the LCD driving unit is configured to send a scanning timing signal and a scanning start timing signal to the touch control unit; the touch control unit is configured to send a driving signal for scanning at a timeslot when the scanning timing signal is a first level; and the LCD driving unit is further configured to display a scanning result at a timeslot when the scanning timing signal is a second level.

The present invention also provides a touch detection method, including the following steps:
defining at least two scanning regions at a driving layer of an in-cell touch panel, wherein the driving layer comprises a plurality of driving lines; and
sending, by a touch control unit, at least two driving signals with different frequencies to scan corresponding scanning regions on the driving layer, wherein a plurality of sensing lines of a sensing layer of the in-cell touch panel are connected to the touch control unit.

Preferably, the sending, by a touch control unit, at least two driving signals with different frequencies to scan corresponding scanning regions on the driving layer comprises:
sending, by the touch control unit, at least two driving signals with different frequencies to the LCD driving unit; and
amplifying, by the LCD driving unit, the at least two driving signals with different frequencies and outputting the amplified driving signals to driving lines in the corresponding scanning regions on the driving layer, to scan the corresponding scanning regions.

Preferably, the sending, by a touch control unit, at least two driving signals with different frequencies to scan corresponding scanning regions on the driving layer comprises:
directly outputting, by the touch control unit, the at least two driving signals with different frequencies to driving lines in the corresponding scanning regions on the driving layer, to scan the corresponding scanning regions.

Preferably, the method further comprises:
detecting a touch control signal and demodulating the touch control signal by using a corresponding frequency demodulation module.

Preferably, the method further comprises:
sending, by the LCD driving unit, a scanning timing signal and a scanning start timing signal to the touch control unit;
sending, by the touch control unit, a driving signal for scanning at a timeslot when the scanning timing signal is a first level; and
displaying, by the LCD driving unit, a scanning result at a timeslot when the scanning timing signal is a second level.

The present invention further provides a liquid crystal display device, including an in-cell touch panel and a touch control unit and an LCD driving unit which are connected to each other, wherein the in-cell touch panel includes a driving layer, a liquid crystal layer and a sensing layer which are sequentially stacked, the driving layer being provided with a driving line, the sensing layer being provided with a sensing line connected to the touch control unit; wherein the driving layer includes at least two scanning regions, and the touch control unit is configured to send at least two driving signals with different frequencies to scan corresponding scanning regions on the driving layer.

In the in-cell touch panel according to the present invention, at least two scanning regions are defined on a driving layer, and a touch control unit sends at least two driving signals with different frequencies, such that the at least two scanning regions may be simultaneously scanned by using the at least two driving signals with different frequencies. Through such multi-frequency scanning, with the same scanning timing, more driving lines are supported, and thus a larger screen is supported; with the same screen size, a shorter driving time is supported, and thus more display time is provided for the LCD and it is favorable to improving the resolution of the screen; and with the same screen size and the same resolution, more coding time is used, and thus the signal-to-noise ratio of the touch control unit is effectively improved and the touch control performance is enhanced.

### BRIEF DESCRIPTION OF THE DRAWINGS

FIG. 1 is a schematic diagram of an in-cell touch panel according to a first embodiment of the present invention;
FIG. 2 is a schematic diagram of connection between an LCD driving unit and a driving layer according to an embodiment of the present invention;
FIG. 3 is a schematic diagram of a diving layer according to an embodiment of the present invention;
FIG. 4 is a schematic diagram of connection between a touch control unit and a sensing layer according to an embodiment of the present invention;
FIG. 5 is a schematic diagram of signal transmission between an LCD driving unit and a touch control unit according to an embodiment of the present invention;
FIG. 6 is a schematic diagram of a scanning start timing signal and a scanning timing signal according to an embodiment of the present invention;
FIG. 7 is a schematic diagram of modules of a touch control unit according to an embodiment of the present invention;
FIG. 8 is a schematic diagram of an in-cell touch panel according to a second embodiment of the present invention; and
FIG. 9 is a flowchart of a touch detection method according to an embodiment of the present invention.

The attainment of the objectives, functional features and advantages of the present invention are further described hereinafter with reference to the specific embodiments and the accompanying drawings.

### DETAILED DESCRIPTION

It should be understood that the embodiments described here are only exemplary ones for illustrating the present invention, and are not intended to limit the present invention.

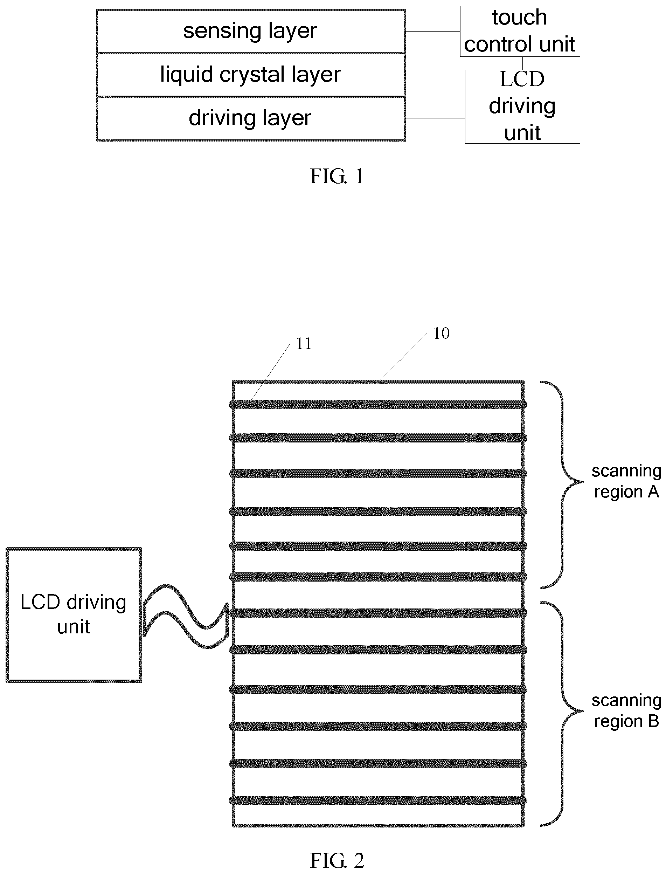

Referring to FIG. 1, a first embodiment of the present invention provides an in-cell touch panel. The in-cell touch panel includes a driving layer, a liquid crystal layer and a sensing layer which are sequentially stacked, and a touch control unit and an LCD driving unit which are connected to each other. The driving layer is connected to the LCD driving unit, and the sensing layer is connected to the touch control unit. The LCD driving unit is preferably an LCD driving integrated circuit (IC) or an LCD driving chip, and the touch control unit is preferably a touch control IC or a touch control chip.

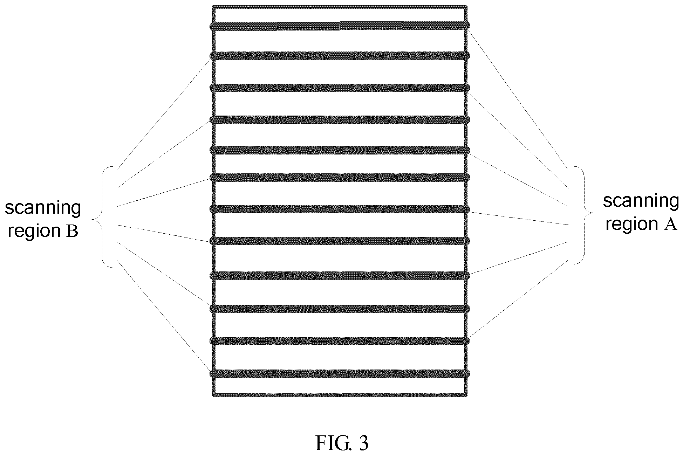

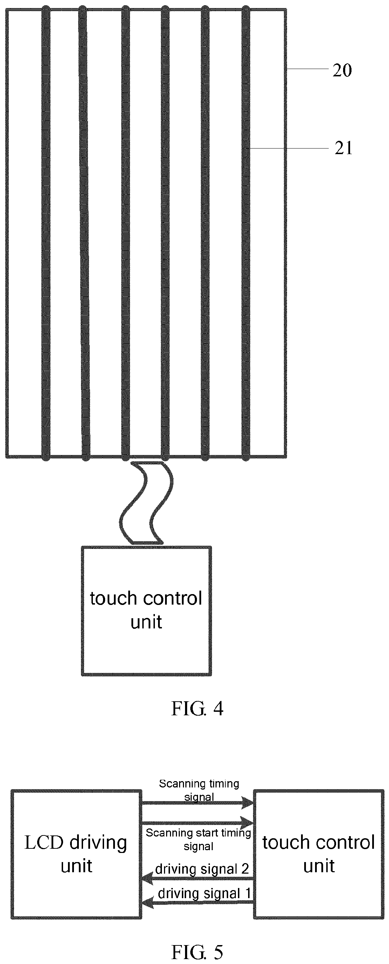

As illustrated in FIG. 2, a driving layer 10 is provided with driving lines 11, the LCD driving unit is connected to the driving lines 11; the driving layer 10 includes at least two scanning regions, which are, for example, a scanning region A and a scanning region B according to this embodiment. In FIG. 2, an upper portion is the scanning region A and a lower portion is the scanning region B. The number of scanning regions on the driving layer and the partitioning of the scanning regions are not limited. For example, as illustrated in FIG. 3, the scanning region A and the scanning region B may also be arranged in a staggering manner. As illustrated in FIG. 4, a sensing layer 20 is provided with a sensing line 21, and a sensing channel of the touch control unit is connected to the sensing line 21. The touch control unit is configured to send at least two driving signals with different frequencies to scan corresponding scanning regions on the driving layer 10.

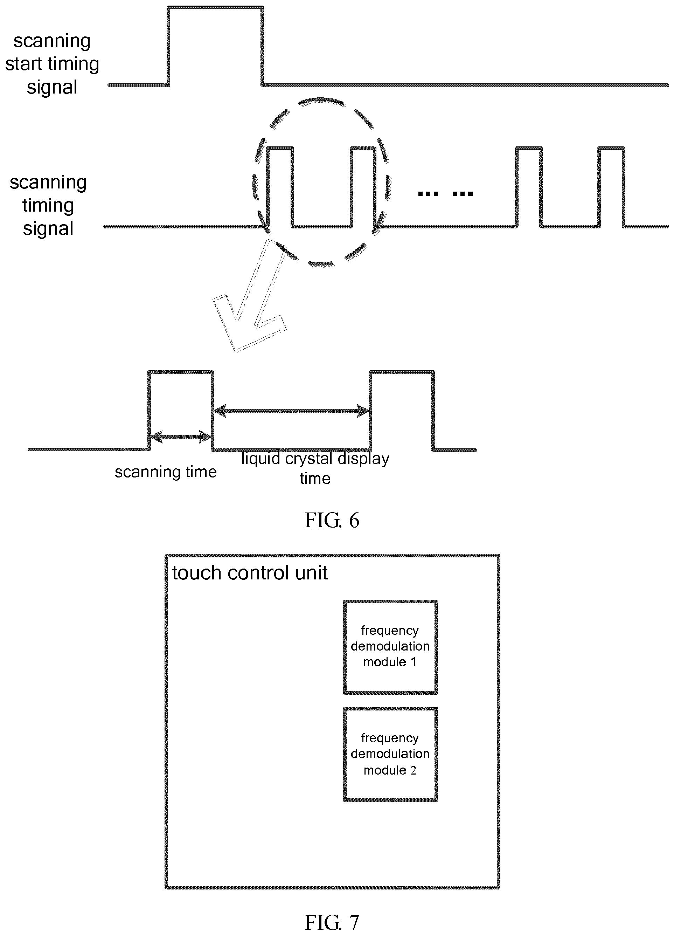

Specifically, as illustrated in FIG. 5 and FIG. 6, the LCD driving unit sends a scanning timing signal and a scanning start timing signal to the touch control unit, wherein the scanning timing signal can be used to control the touch control unit to perform scanning, and the scanning start timing signal indicates start of scanning. A raising edge or a falling edge of the scanning start timing signal indicates start of the scanning activity of a current frame. Upon receiving the scanning timing signal and the scanning start timing signal, the touch control unit synchronizes the scanning start timing signal and the scanning timing signal, and send at least two driving signals with different frequencies to the LCD driving unit at a timeslot when the scanning timing signal is a first level, for example, a driving signal 1 and a driving signal 2 with different frequencies in this embodiment. Upon receiving the driving signals, the LCD driving unit amplifies the driving signals and outputs the amplified driving signals with different frequencies to driving lines in the corresponding scanning regions on the driving layer, for example, outputting the driving signal 1 to the data lines in the scanning region A and outputting the driving signal 2 to the data lines in the scanning region B, to simultaneously scan the scanning region A and the scanning region B. In addition, the LCD driving unit further displays a scanning result at a timeslot when the scanning timing signal is a second level. That is, the timeslot when the scanning timing signal is the first level is the time for scanning the driving layer by the touch control unit, and the timeslot when the scanning timing signal is the second level is the time for displaying the scanning result by the LCD driving unit, that is, the liquid crystal display time.

The first level may be a high level or a low level, and correspondingly, the second level may be a low level or a high level; that is, when the first level is a high level, the second level is a low level, and when the first level is a low level, the second level is a high level. As illustrated in FIG. 6, in this embodiment, the timeslot when the scanning timing signal is the high level is the time for scanning the driving layer by the touch control unit, and the timeslot when the scanning timing signal is the low level is the time for displaying the scanning result by the LCD driving unit, that is, the liquid crystal display time.

Further, as illustrated in FIG. 7, the touch control unit further includes at least two frequency demodulation modules, for example, a frequency demodulation module 1 and a frequency demodulation module 2 in this embodiment. The touch control unit detects a touch control signal via a sensing channel, wherein the touch control signal is a driving signal which is changed after a user performs a touch control operation. Since the driving signals in different scanning regions have different frequencies, the touch control signals with corresponding frequencies need to be demodulated by using corresponding frequency demodulation modules, and then the demodulated touch control signals need to be sent to the corresponding modules for processing. In this way, the function of touch sensing is implemented.

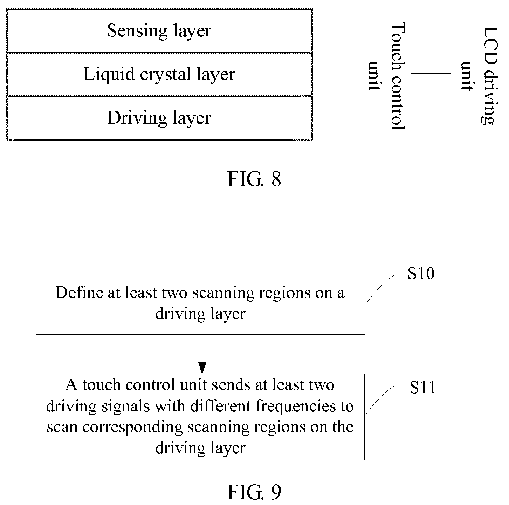

Referring to FIG. 8, a second embodiment of the present invention provides an in-cell touch panel. This embodiment differs from the first embodiment in that the touch control unit is connected to the sensing line on the sensing layer and the driving lines on the driving layer respectively, and the touch control unit directly outputs at least two driving signals with different frequencies to driving lines in the corresponding scanning regions on the driving layer. As such, the circuit structure can be simplified.

In the in-cell touch panel according to the present invention, at least two scanning regions are defined at a driving layer, and a touch control unit sends at least two driving signals with different frequencies, such that the at least two scanning regions may be simultaneously scanned by using the at least two driving signals with different frequencies. Through such multi-frequency scanning, with the same scanning timing, more driving lines are supported, and thus a larger screen is supported; with the same screen size, a shorter driving time is supported, and thus more display time is provided for the LCD and it is favorable to improving the resolution of the screen; and with the same screen size and the same resolution, more coding time is used, and thus the signal-to-noise ratio of the touch control unit is effectively improved.

Referring to FIG. 9, an embodiment of the present invention provides a touch detection method, wherein the touch detection method includes the following steps:
Step S10: At least two scanning regions are defined on a driving layer.
   As illustrated in FIG. 2 and FIG. 3, a scanning region A and a scanning region B may be defined on the driving layer, wherein both the scanning region A and the scanning region B have at least one driving line.
Step S 11: A touch control unit sends at least two driving signals with different frequencies to scan corresponding scanning regions on the driving layer.

Optionally, the touch control unit may firstly send at least two driving signals with different frequencies, for example, a driving signal 1 and a driving signal 2. Upon receiving the driving signals, the LCD driving unit amplifies the driving signals, and finally outputs the driving signals with different frequencies to driving lines in the corresponding scanning regions on the driving layer to scan the corresponding scanning regions, for example, outputting the driving signal 1 to a driving line in the scanning region A and outputting the driving signal 2 to a driving line in the scanning region B.

Preferably, the touch control unit may directly output the at least two driving signals with different frequencies to driving lines in the corresponding scanning regions on the driving layer, to scan the corresponding scanning regions.

In addition, the touch control unit detects a touch control signal via a sensing channel, wherein the touch control signal is a driving signal which is changed after a user performs a touch control operation. Since the driving signals in different scanning regions have different frequencies, the touch control signals with corresponding frequencies need to be demodulated by using corresponding frequency demodulation modules, and then the demodulated touch control signals need to be sent to the corresponding modules for processing. In this way, the function of touch sensing is implemented.

In addition, in this embodiment, the LCD driving unit sends a scanning timing signal and a scanning start timing signal to the touch control unit; the touch control unit sends a driving signal for scanning at a timeslot when the scanning timing signal is a first level; and the LCD driving unit displays a scanning result at a timeslot when the scanning timing signal is a second level. The first level may be a high level or a low level, and correspondingly, the second level may be a low level or a high level; that is, when the first level is a high level, the second level is a low level, and when the first level is a low level, the second level is a high level.

With the touch detection method according to the present invention, at least two scanning regions are defined on a driving layer, and a touch control unit sends at least two driving signals with different frequencies, such that the at least two scanning regions may be simultaneously scanned by using the at least two driving signals with different frequencies. Through such multi-frequency scanning, with the same scanning timing, more driving lines are supported, and thus a larger screen is supported; with the same screen size, a shorter driving time is supported, and thus more display time is provided for the LCD and it is favorable to improving the resolution of the screen; and with the same screen size and the same resolution, more coding time is used, and thus the signal-to-noise ratio of the touch control unit is effectively improved.

It should be noted that the in-cell touch panel provided in the above embodiment is based on the same inventive concept as the touch detection method embodiment, and the technical features in the apparatus embodiments are correspondingly applicable to the method embodiments, which are thus not described herein any further.

The present invention further provides a liquid crystal display device, comprising an in-cell touch panel, wherein the in-cell touch panel comprises a driving layer, a liquid crystal layer and a sensing layer which are sequentially stacked, and a touch control unit and an LCD driving unit which are connected to each other, the driving layer being provided with a driving line, the sensing layer being provided with a sensing line connected to the touch control unit; wherein the driving layer comprises at least two scanning regions, and the touch control unit is configured to send at least two driving signals with different frequencies to scan corresponding scanning regions on the driving layer. The in-cell touch panel described in this embodiment is the in-cell touch panel involved in the above embodiment of the present invention, which is thus not described herein any further.

In the liquid crystal display device according to the present invention, at least two scanning regions are defined on a driving layer, and a touch control unit sends at least two driving signals with different frequencies, such that the at least two scanning regions may be simultaneously scanned by using the at least two driving signals with different frequencies. Through such multi-frequency scanning, with the same scanning timing, more driving lines are supported, and thus a larger screen is supported; with the same screen size, a shorter driving time is supported, and thus more display time is provided for the LCD and it is favorable to improving the resolution of the screen; and with the same screen size and the same resolution, more coding time is used, and thus the signal-to-noise ratio of the touch control unit is effectively improved.

The above embodiments illustratively describe two driving signals with different frequencies and two scanning regions as an example. In practice, more than two driving signals with different frequencies and more than two scanning regions may also be used.

It should be understood that described above are merely exemplary embodiments of the present invention, but are not intended to limit the scope of the present invention. Any equivalent structure or equivalent process variation made based on the specification and drawings of the present invention, which is directly or indirectly applied in other related technical fields, fall within the scope of the present invention.

### INDUSTRIAL APPLICABILITY

In the in-cell touch panel according to the present invention, at least two scanning regions are defined on a driving layer, and a touch control unit sends at least two driving signals with different frequencies, such that the at least two scanning regions may be simultaneously scanned by using the at least two driving signals with different frequencies. Through such multi-frequency scanning, with the same scanning timing, more driving lines are supported, and thus a larger screen is supported; with the same screen size, a shorter driving time is supported, and thus more display time is provided for the LCD and it is favorable to improving the resolution of the screen; and with the same screen size and the same resolution, more coding time is used, and thus the signal-to-noise ratio of the touch control unit is effectively improved.

## Claims

1. An in-cell touch panel, comprising a driving layer, a liquid crystal layer and a sensing layer which are sequentially stacked, and a touch control unit and an LCD driving unit which are connected to each other, the driving layer being provided with a plurality of driving lines, the sensing layer being provided with a plurality of sensing lines connected to the touch control unit; wherein the driving layer comprises at least two scanning regions, and the touch control unit is configured to send at least two driving signals with different frequencies to scan corresponding scanning regions on the driving layer.

2. The in-cell touch panel according to claim 1, wherein the driving lines are connected to the LCD driving unit, the touch control unit is configured to send at least two driving signals with different frequencies to the LCD driving unit; and the LCD driving unit is configured to amplify the at least two driving signals with different frequencies and output the amplified driving signals to the driving lines in the corresponding scanning regions on the driving layer.

3. The in-cell touch panel according to claim 1, wherein the driving line are connected to the touch control unit, and the touch control unit is configured to directly output at least two driving signals with different frequencies to the driving lines in the corresponding scanning regions on the driving layer.

4. The in-cell touch panel according to any one of claims 1 to 3, wherein the touch control unit comprises at least two frequency demodulation modules; and the touch control unit is further configured to detect a touch control signal and demodulate the touch control signal by using a corresponding frequency demodulation module.

5. The in-cell touch panel according to any one of claims 1 to 3, wherein the LCD driving unit is configured to send a scanning timing signal and a scanning start timing signal to the touch control unit; the touch control unit is configured to send a driving signal for scanning at a timeslot when the scanning timing signal is a first level; and the LCD driving unit is further configured to display a scanning result at a timeslot when the scanning timing signal is a second level.

6. A touch control detection method, comprising:
defining at least two scanning regions on a driving layer of an in-cell touch panel, wherein the driving layer comprises a plurality of driving lines; and
sending, by a touch control unit, at least two driving signals with different frequencies to scan corresponding scanning regions on the driving layer, wherein a plurality of sensing lines of a sensing layer of the in-cell touch panel are connected to the touch control unit.

7. The touch control detection method according to claim 6, wherein the sending, by a touch control unit, at least two driving signals with different frequencies to scan corresponding scanning regions on the driving layer comprises:
sending, by the touch control unit, at least two driving signals with different frequencies to the LCD driving unit; and
amplifying, by an LCD driving unit, the at least two driving signals with different frequencies, and outputting the amplified driving signals to driving lines in the corresponding scanning regions on the driving layer, to scan the corresponding scanning regions.

8. The touch control detection method according to claim 6, wherein the sending, by a touch control unit, at least two driving signals with different frequencies to scan corresponding scanning regions on the driving layer comprises:
directly outputting, by the touch control unit, the at least two driving signals with different frequencies to driving lines in the corresponding scanning regions on the driving layer, to scan the corresponding scanning regions.

9. The touch control detection method according to any one of claims 6 to 8, further comprising:
detecting a touch control signal, and demodulating the touch control signal by using a corresponding frequency demodulation module.

10. The touch control detection method according to any one of claims 6 to 8, further comprising:
sending, by an LCD driving unit, a scanning timing signal and a scanning start timing signal to the touch control unit; and
sending, by the touch control unit, a driving signal for scanning at a timeslot when the scanning timing signal is a first level; and
displaying, by the LCD driving unit, a scanning result at a timeslot when the scanning timing signal is a second level.

11. A liquid crystal display device, comprising an in-cell touch panel according to any one of claims 1 to 5.
